# EUROPÄISCHE PATENTSCHRIFT

(11) **EP 0 512 326 B1**
(45) Veröffentlichungstag und Bekanntmachung des Hinweises auf die Patenterteilung: **26.03.1997**
(21) Anmeldenummer: 92106906.8
(22) Anmeldetag: 23.04.1992
(51) Int. Cl.: A01B 71/06, B62D 49/06

(54) **Verwendung einer lösbaren Flanschverbindung an einer Deichsel und gezogene Erntemaschine**
Use of a demountable flange connection on a drawbar and drawn harvesting machine
Utilisation d'un assemblage à flasques démontables sur un timon et machine de récolte trainée

(30) Priorität: 02.05.1991 DE 4114280
(43) Veröffentlichungstag der Anmeldung: 11.11.1992
(73) Patentinhaber: DEERE & COMPANY, Moline, Illinois 61265 (US)
(72) Erfinder: Franet, Roger, F-57200 Sarreguemines (FR); Belat, Paul, F-57200 Sarreguemines (FR)
(74) Vertreter: Feldmann, Bernhard

(56) Entgegenhaltungen:
- EP-A- 0 196 263
- EP-A- 0 196 427
- US-A- 4 525 987
- US-A- 4 738 461

## Beschreibung

Die Erfindung betrifft eine Verwendung einer lösbaren Flanschverbindung zur wahlweisen Befestigung sowohl eines Schwenkzapfens als auch eines Getriebes an einer Deichsel einer angetriebenen, von einem Fahrzeug gezogenen Maschine und eine gezogene und über eine Gelenkwelle und eine Kraftübertragungswelle antreibbare Erntemaschine.

Deichseln dienen dazu, Maschinen an Fahrzeuge, z. B. Ackerschlepper, anzuhängen, um sie über ein Feld, eine Straße oder dergleichen ziehen zu können. Wird die Maschine, z. B. eine Mähmaschine, während der Fahrt zudem angetrieben, erstreckt sich zu dem Fahrzeug meist auch eine Gelenkwelle oder dergleichen, um die Antriebsleistung übertragen zu können. Während einer Kurvenfahrt ändert sich die relative Stellung zwischen der Maschine und somit deren Deichsel und Gelenkwelle und dem Fahrzeug. Sobald die Gelenkwelle aufgrund dieser Kurvenfahrt einen Winkel bestimmter Größe zu einer von ihr angetriebenen Welle überschreitet, kann eine störungsfreie Drehmomentübertragung nicht mehr erfolgen.

Zur Vermeidung von Problemen in der Drehmomentübertragung während einer Kurvenfahrt ist daher vorgeschlagen worden (US-PS-4,525,987), ein Schwenkgetriebe mit zwei Getriebegehäusen zu verwenden, die relativ zueinander um eine vertikale Achse schwenkbar sind, wobei das antriebsseitige Getriebegehäuse über eine Kupplungsvorrichtung stets zu dem Fahrzeug hin aus-gerichtet wird; hierzu ist es entweder mit einem Zugpendel oder mit den unteren Lenkern einer Drei-Punkt-Kupplung verbunden.

Die US-A-4,738,461 offenbart eine Vorrichtung zum Anschließen eines Mähgeräts an einen Ackerschlepper. Hierzu weist das Mähgerät eine Deichsel auf, an deren Unterseite im vorderen Bereich ein Arm mit einer Lagerkugel angeschweißt ist, die von einem an dem Ackerschlepper befindlichen Zapfen schwenkbar aufgenommen wird. Die Lagerkugel ist schwenkbar in einer Pfanne in dem Arm aufgenommen und läßt eine Kippbewegung zwischen dem Mähgerät und dem Ackerschlepper zu. An das vordere Ende der Deichsel sind zwei übereinanderliegende Winkelgetriebe angeschlossen, die von einer Gelenkwelle eingeleitetes Drehmoment auf eine Kraftübertragungswelle innerhalb oder unterhalb der Deichsel übertragen.

Bei anderen Maschinen wird aus Kostengründen auf ein Schwenkgetriebe verzichtet und der Abstand der Anschlußpunkte der Gelenkwelle so groß wie möglich gewählt, um deren Abweichung von der gestreckten Linie so gering wie möglich zu halten. In diesem Fall wird die Deichsel mit einem Zugpendel schwenkbar verbunden.

Aus dem Prospekt "KUHN MÄHKNICKZETTER FC 250 - FC 300" aus dem Jahre 1985 geht eine Deichsel mit einem starr angeschweißten Bock zum Anschluß der Deichsel an ein Zugpendel sowie nach einer anderen Ausführung ein Getriebe mit zwei schwenkbaren Getriebehälften hervor, das an einen anderen an die Deichsel angeschweißten Bock angeschraubt ist.

Bei diesem Stand der Technik ist es nachteilig, daß die Deichseln nur für die jeweiligen Einsatzbedingungen mit den jeweiligen Anschlüssen benutzbar sind. Beim Eintreten anderer Betriebszustände muß eine vollkommen andere Deichsel hergestellt und angebaut werden. Die Herstellung einer zweiten Deichsel ist kostenaufwendig und verhindert eine Materialoptimierung.

Die der Erfindung zugrunde liegende Aufgabe wird darin gesehen, eine Lösung vorzuschlagen, nach der einheitliche Deichseln für auf verschiedene Weise angetriebene Maschinen erreicht werden können.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise kann die Deichsel an ihrem ersten Flanschteil entweder eine Kupplungsvorrichtung aufnehmen, die einer davon getrennt zu der Kraftübertragungswelle verlaufenden Gelenkwelle Platz bietet. Oder die Deichsel kann mit dem zweiten Flanschteil ein Getriebe aufnehmen, das eine Schwenkbewegung zuläßt und den Antrieb umlenkt. Im wesentlichen sind nur die mit dem zweiten Flanschteil verbundenen Komponenten entsprechend auszubilden; die Deichsel bleibt die gleiche.

Die insbesondere endseitige Lagerung der Kraftübertragungswelle in einem Halter an der Deichsel vermeidet das Entstehen von Biegemomenten bei ihrem Anschluß an das Getriebe bzw. die Gelenkwelle. Vorteilhafterweise ist der Halter zu dem ersten Flanschteil wenigstens so weit entfernt, daß bei geringer Kurvenfahrt noch keine spürbaren Unförmigkeiten in der Leistungsübertragung auftreten.

Sind an dem Halter mehrere starre oder eine verstellbare Befestigungsstelle für die Kraftübertragungswelle vorgesehen, die zu dem ersten Flanschteil unterschiedlich weit entfernt sind, ist es einfach, auf die verschiedenen Anbauverhältnisse sowie auf die vielfältige Kombinationsmöglichkeit zwischen Maschine und Fahrzeug Rücksicht zu nehmen.

Maschinen für höhere Anforderungen können auch bei der erfindungsgemäßen Deichsel mit einem aus den eingangs genannten Schriften bekannten Schwenkgetriebe, bestehend aus zwei relativ zueinander schwenkbaren Getriebegehäusen, bestückt werden und somit auch bei engen Kurven gleichmäßig das Drehmoment übertragen.

Greift die Kupplungsvorrichtung an dem anderen Getriebegehäuse um eine im wesentlichen horizontale Achse schwenkbar an, können die Maschine und das Fahrzeug auch vertikal zueinander schwenken, ohne daß Verspannungen in dem Gespann entstehen.

Befindet sich der erste Flanschteil an der Unterseite der Deichsel, kann diese relativ hoch angeordnet werden und kommt nicht in Kontakt mit Erntegütern oder dergleichen.

Eine Verspannung in dem Gespann beim Überfahren von Bodenunebenheiten unterbleibt auch dann, wenn die Kupplungsvorrichtung, beispielsweise über ein Kugelgelenk, auf dem Schwenkzapfen gelagert ist, wobei die verwendete Kupplungsstange stets parallel zu der Bodenoberfläche gehalten wird.

Die Maschine kann gegenüber dem Boden in verschiedene Höhen gebracht werden, wenn die Kupplungsvorrichtung an die - üblicherweise in der Höhe verstellbaren - unteren Lenker einer Drei-Punkt-Gerätekupplung des Fahrzeugs anschließbar ist.

Ist der Halter zugleich als Abstellstütze ausgebildet, kann die Maschine von dem Fahrzeug getrennt und die Deichsel auf dem Boden abgelegt werden, ohne daß das Gewicht in das Getriebe oder die Kupplungsvorrichtung eingeleitet werden müßte.

In der Zeichnung ist ein nachfolgend näher beschriebenes Ausführungsbeispiel der Erfindung dargestellt.

Es zeigt:
- Fig. 1: ein Fahrzeug und eine Maschine, die über eine erfindungsgemäße Deichsel miteinander verbunden sind, in Draufsicht,
- Fig. 2: einen vorderen Abschnitt der Deichsel in Seitenansicht mit einem Getriebe und
- Fig. 3: den vorderen Abschnitt der Deichsel in Seitenansicht mit einem Schwenkzapfen.

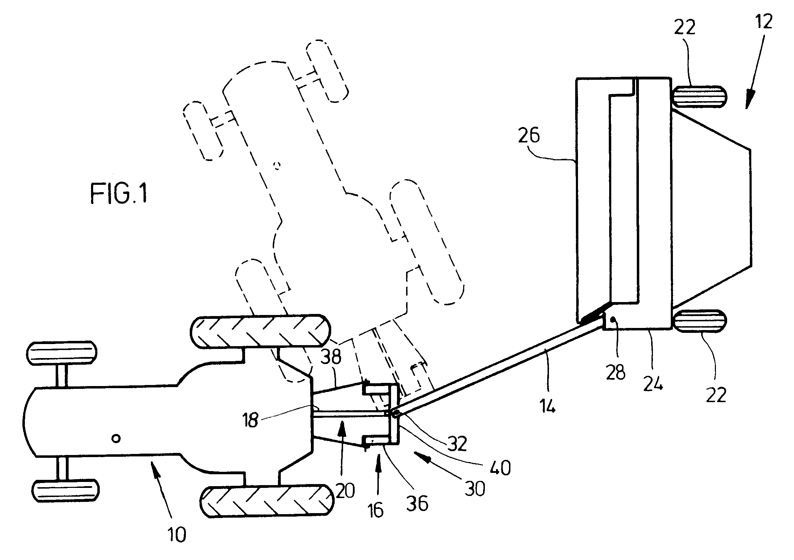

In Figur 1 ist ein Fahrzeug 10 zu erkennen, das eine Maschine 12 hinter sich herzieht und hierzu mit dieser über eine erfindungsgemäße Deichsel 14 verbunden ist.

Das Fahrzeug 10, das als landwirtschaftlicher Ackerschlepper dargestellt ist, kann ebenso ein Geländefahrzeug oder dergleichen sein. An der Rückseite des Fahrzeugs 10 ist eine herkömmliche Drei-Punkt-Gerätekupplung 16 vorgesehen, wie dies bekannt ist. Schließlich befindet sich im Bereich der Drei-Punkt-Gerätekupplung 16 ein Zapfwellenstummel 18, an den eine Gelenkwelle 20 drehfest angeschlossen werden kann.

Normalerweise, d. h. bei Geradeausfahrt, nimmt das Fahrzeug 10 zu der Maschine 12 die in durchgezogenen Linien gezeigte Stellung ein; das Fahrzeug 10 ändert jedoch seine relative Stellung zu der Maschine 12 beim Durchfahren einer Kurve, beispielsweise einer Rechtskurve, wie dies in unterbrochenen Linien gezeigt ist.

Bei der gezeichneten Maschine 12 handelt es sich um ein Mähgerät. Es kommt jedoch auch ein Mähschlagzetter, ein Feldhäcksler, ein angetriebenes Bodenbearbeitungsgerät und jede andere Art an landwirtschaftlichem oder industriellem Gerät in Frage. Die Maschine 12 stützt sich über Räder 22, die an einem Rahmen 24 drehbar aufgenommen sind, beweglich auf dem Boden ab, wobei herkömmlich die Stellung der Räder 22 gegenüber dem Rahmen 24 in der Höhe veränderbar ist, um den Abstand einer in diesem Ausführungsbeispiel von dem Rahmen 24 getragenen Mähvorrichtung 26 zu dem Boden zu ändern. Gegebenenfalls erfolgt die Verstellung der Räder 22 mittels nicht gezeigter Hydraulikmotoren. An dem Rahmen 24 ist außerdem ein Lager 28 vorgesehen, in dem die Deichsel 14 horizontal schwenkbar gehalten ist. Auch zwischen der Deichsel 14 und dem Rahmen 24 ist eine nicht gezeigte, aber an sich bekannte Stellvorrichtung vorgesehen, mit deren Hilfe der seitliche Abstand der Maschine 12 zu dem Fahrzeug 10 geändert werden kann.

Die Deichsel 14 enthält normalerweise einen als gerader Hohlprofilträger ausgebildeten Holm 29 und ist an ihrem rückwärtigen Ende in dem Lager 28 gehalten, während ihr frontseitiges Ende über eine Kupplungsvorrichtung 30 an der Drei-Punkt-Gerätekupplung 16 angreift. Da das aus dem Fahrzeug 10 und der Maschine 12 gebildete Gespann, wie aus Figur 1 zu erkennen ist, auch Kurven durchfährt, ist zwischen der Kupplungsvorrichtung 30 und der Deichsel 14 ein Schwenklager 32 vorgesehen, das eine Schwenkbewegung um eine vertikale Achse 34 zuläßt.

Die Kupplungsvorrichtung 30 weist in dem in Figur 1 gezeigten Beispiel zwei Arme 36 auf, die an untere Lenker 38 der Drei-Punkt-Gerätekupplung 16 angeschlossen werden können. Zwischen den beiden Armen 36 erstreckt sich eine Traverse 40, über die die Verbindung mit der Deichsel 14 erfolgt.

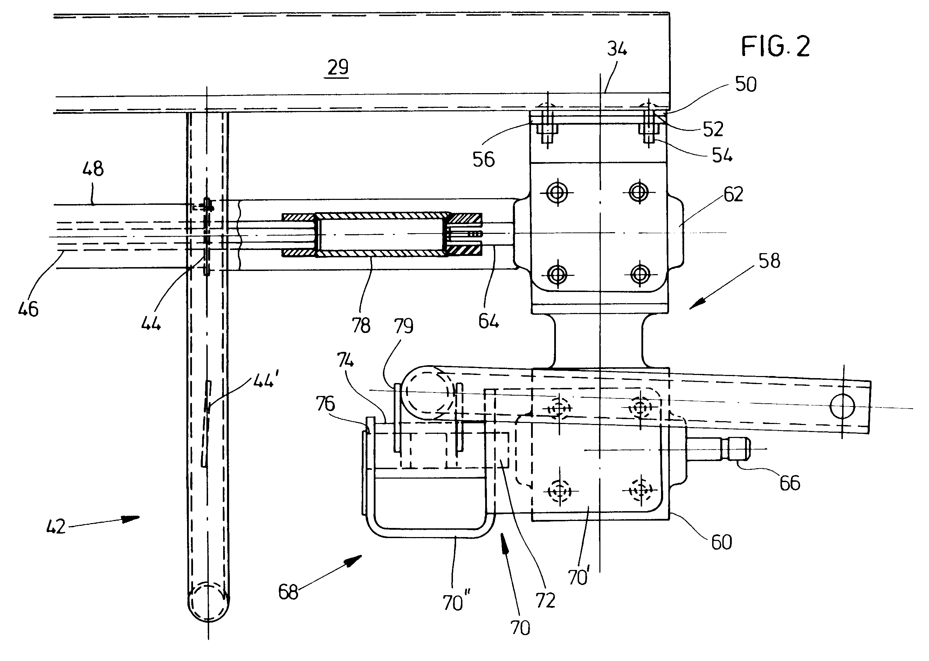

Für die weitere Beschreibung wird auf Figur 2 verwiesen.

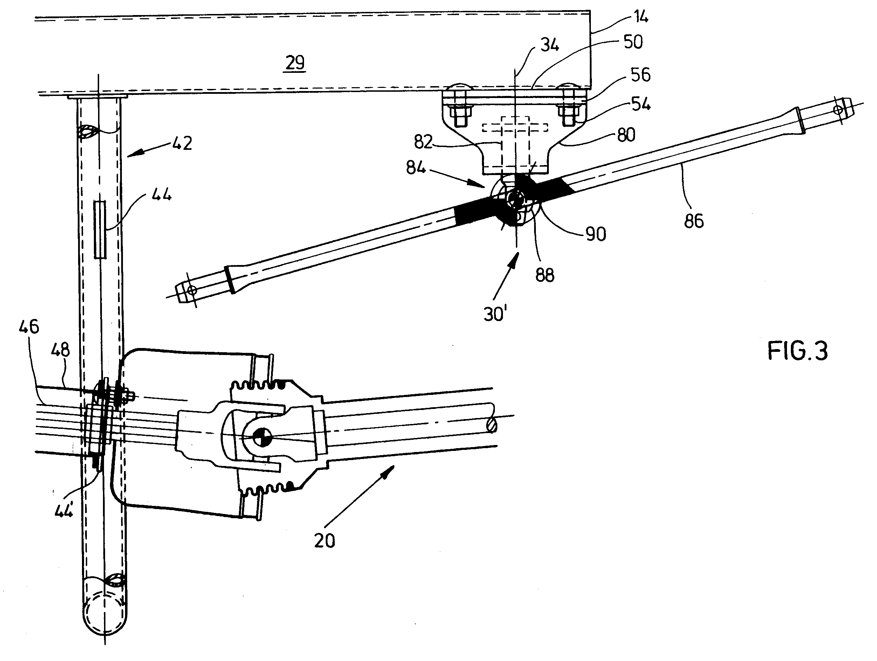

Nach Figur 2 erstreckt sich mit einigem Abstand zu der Vorderkante der Deichsel 14 von dem Holm 29 nach unten ein Halter 42, der in diesem Ausführungsbeispiel aus einem zu einem -U- gebogenen Rohr besteht, dessen freie Schenkelenden an die Unterseite des Holms 29 angeschweißt oder angeschraubt sind. In den Zwischenraum zwischen den Schenkeln ist eine obere und eine untere aufgebohrte Lagerplatte 44 und 44' eingefügt, durch die sich eine Kraftübertragungswelle 46 mit einem Schutzrohr 48 erstreckt und die an dem Halter 42 befestigt sind. Bei dem Ausführungsbeispiel nach Figur 2 erstreckt sich die Kraftübertragungswelle 46 durch die obere Lagerplatte 44 und bei dem Ausführungsbeispiel nach Figur 3 durch die untere Lagerplatte 44'. Die obere Lagerplatte 44 verläuft parallel zu den Längsachsen der Schenkel; die untere verläuft zu diesen geringfügig geneigt. Der sich zwischen den Schenkeln befindliche Steg des "U" bildet den Fuß einer Stütze, so daß die Deichsel 14 mit dem Halter 42 auf den Boden abgestellt werden kann.

Abschließend mit der vorderen Endkante des Holms 29 ist an dessen Unterseite ein erster Flanschteil 50 flach angeschweißt, der nach der gezeigten Ausführungsform aus einer viereckigen Platte besteht, in die mehrere Bohrungen 52 zur Aufnahme von Schrauben 54 eingearbeitet sind. Über die Schrauben 54 kann ein zweiter Flanschteil 56 mit dem ersten Flanschteil 50 starr verbunden werden.

Gemäß Figur 2 hält der zweite Flanschteil 56 ein Getriebe 58, das aus zwei im wesentlichen gleichen Getriebegehäusen 60 und 62 besteht. Ein derartiges als Schwenkgetriebe ausgebildetes Getriebe 58 ist an sich bekannt und ist so ausgebildet, daß das untere Getriebegehäuse 60 um die vertikale Achse 34 gegenüber dem oberen Getriebegehäuse 62 horizontal schwenken kann; hierzu ist es auf nicht gezeigte Weise in dem oberen Getriebegehäuse 62 schwenkbar gelagert.

Anstatt zweier schwenkbar miteinander verbundener Getriebegehäuse 60, 62, könnte die Antriebsleistung auch mittels mehrerer Winkelgelenke übertragen werden, die zwischen sich horizontal schwenkbar an dem zweiten Flanschteil 56 gehalten sind.

Während aus dem oberen und starren Getriebegehäuse 62 mit der Kraftübertragungswelle 46 fluchtend eine Abtriebswelle 64 austritt, die mit der Kraftübertragungswelle 46 drehfest verbindbar ist, erstreckt sich aus dem unteren und schwenkbaren Getriebegehäuse 60 eine Antriebswelle 66 nach vorne, um über die Gelenkwelle 20 mit dem Zapfwellenstummel 18 verbunden werden zu können. Auf nicht gezeigte Weise sind in den beiden Getriebegehäusen 60, 62 je ein Winkelgetriebe vorgesehen, über die der Kraftfluß von der Antriebswelle 66 zu der Abtriebswelle 64 verläuft.

Auf der der Antriebswelle 66 gegenüberliegenden Seite des unteren Getriebegehäuses 60 befindet sich ein Lager 68, das einen Träger 70, einen Lagerbolzen 72 und ein Lagergehäuse 74 enthält.

Der Träger 70 ist als ein zweifacher U-Bügel ausgebildet, umgreift mit den Schenkeln des ersten "U" 70' das untere Getriebegehäuse 60 an seinen Seitenflächen und ist dort mit dem unteren Getriebegehäuse 60 verschraubt. Ein Schenkel des zweiten "U" 70'' bildet zugleich den vertikal verlaufenden Steg zwischen den beiden Schenkein des ersten "U" 70' und hält das zweite "U" 70'' zwischen dem unteren Getriebegehäuse 60 und dem Halter 42, mit Blick auf Figur 2.

In den Schenkeln des ersten "U" 70' sind zwei Bohrungen 76 eingebracht, die in sich den Lagerbolzen 72 axial fest aufnehmen. Der Lagerbolzen 72 erstreckt sich demnach waagrecht, bzw. im wesentlichen waagrecht in der Symmetrieebene des aus dem unteren Getriebegehäuse 60 und der Kupplungsvorrichtung 30 bestehenden Zusammenbaus.

Das Lagergehäuse 74 nimmt mit einer Lagerschale 78 den Lagerbolzen 72 in sich schwenkbar auf und greift mit einer Gabel 79 starr an der Traverse 40 der Kupplungsvorrichtung 30 an.

Nach alledem ist zu erkennen, daß die Kupplungsvorrichtung 30 um den Lagerbolzen 72 vertikal und über das Lager 68 mit dem unteren Getriebegehäuse 60 um die vertikale Achse 34 horizontal schwenken kann.

Der gesamte aus den beiden Getriebegehäusen 60, 62, dem Lager 68 und der Kupplungsvorrichtung 30 bestehende Zusammenbau stellt in sich eine Einheit dar, die mit dem zweiten Flanschteil 56 starr verbunden ist und über diesen an den ersten Flanschteil 50 angeschraubt werden kann.

Zum Betrieb der Maschine 12 wird diese mittels der Kupplungsvorrichtung 30 über die Drei-Punkt-Gerätekupplung 16 an das Fahrzeug 10 angeschlossen und kann über letztere in der Höhe verstellt werden. Außerdem wird der Antrieb über den Zapfwellenstummel 18, die Gelenkwelle 20, die Antriebswelle 66, die in den Getriebegehäusen 60, 62 befindlichen Winkelgetriebe, die Abtriebswelle 64, eine Muffe 78 und die Kraftübertragungswelle 46 zu der Mähvorrichtung 26 geleitet. Durchfährt das Fahrzeug 10 mit der Maschine 12 eine Kurve, kann die Kupplungsvorrichtung 30 mit dem unteren Getriebegehäuse 60 gegenüber dem oberen Getriebegehäuse 62 und somit gegenüber der Deichsel 14 um die vertikale Achse 34 horizontal schwenken.

Für die weitere Beschreibung wird auf Figur 3 verwiesen.

Hinsichtlich der Deichsel 14, des ersten Flanschteils 50, des Halters 42 und der Lagerplatte 44' entspricht das in Figur 3 gezeigte Ausführungsbeispiel dem in Figur 2 gezeigten. Allerdings ist die in ihrer Länge unveränderte Kraftübertragungswelle 46 mit ihrem Schutzrohr 48 nunmehr nicht in der oberen Lagerplatte 44, sondern in der unteren Lagerplatte 44' gehalten und mit ihrem vorderen Endstück direkt an die Gelenkwelle 20 angeschlossen. Dementsprechend verläuft die Kraftübertragungswelle 46 nicht parallel zu dem Holm 29, sondern nimmt zu diesem eine geringe Neigung ein.

Der zweite Flanschteil 56 an sich ist wiederum deckungsgleich zu dem ersten Flanschteil 50 ausgebildet; er trägt aber ein sich nach unten erstreckendes Gehäuse 80 auf, in dem ein um eine vertikale Achse drehbarer Schwenkzapfen 82 axial festgehalten ist. Der Schwenkzapfen 82 erstreckt sich nach unten über das Gehäuse 80 hinaus und nimmt an seinem außerhalb des Gehäuses 80 befindlichen Abschnitt ein Kugelgelenk 84 auf, das dem Anschluß einer Kupplungsstange 86 der Kupplungsvorrichtung 30' dient.

Das Kugelgelenk 84 besteht aus einer Kugel 88, die in einer Pfanne 90 in jeder Richtung schwenkbeweglich und unverlierbar aufgenommen ist, wobei die Kugel 88 mit dem Schwenkzapfen 82 und die Pfanne 90 mit der Kupplungsstange 86 jeweils starr verbunden ist. Die Kugel 88 könnte jedoch auch auf einem starren Schwenkzapfen 82 beweglich getragen sein.

Die Kupplungsstange 86 ist stab- oder stabförmig ausgebildet und weist zwei Kupplungsenden 92 auf, die in der Drei-Punkt-Gerätekupplung 16 unverlierbar aufgenommen werden können.

Bei dieser Ausführungsform wird mittels des zweiten Flanschteils 56 die horizontal unbegrenzt und vertikal begrenzt schwenkbare Kupplungsvorrichtung 30' über die Kupplungsstange 86 an die Deichsel 14 angeschlossen.

Die Maschine 12 kann zum Betrieb nunmehr mittels der Kupplungsstange 86 an das Fahrzeug 10 angeschlossen und über die Gelenkwelle 20 direkt angetrieben werden.

Aus den Figuren 2 und 3 wird deutlich, daß der zweite Flanschteil 56 entweder mit dem Getriebe 58 und der Kupplungsvorrichtung 30 oder mit der Kupplungsstange 86 bestückt an den ersten Flanschteil 50 angeschraubt werden kann, um eine Verbindung zwischen dem Fahrzeug 10 und der Maschine 12 herzustellen.

## Patentansprüche

1. Verwendung einer lösbaren Flanschverbindung zur wahlweisen Befestigung sowohl eines Schwenkzapfens (82) als auch eines Getriebes (58) an einer Deichsel (14) einer angetriebenen, von einem Fahrzeug (10) gezogenen Maschine (12), wobei
a) die Deichsel (14) eine erste Flanschhälfte (50) aufweist,
b) sowohl der Schwenkzapfen (82) als auch das Getriebe (58) jeweils mit einer zweiten Flanschhälfte (56) versehen sind,
c) eine um eine wenigstens im wesentlichen vertikale Achse schwenkbare Kupplungsvorrichtung (30, 30') vorgesehen ist, die einerseits an dem Schwenkzapfen (82) oder dem Getriebe (58) angreift und andererseits an das Fahrzeug (10) anbringbar ist,
d) eine mit dem Fahrzeug verbindbare Gelenkwelle (20) unmittelbar oder mittelbar über ein Getriebe (58) an eine Kraftübertragungswelle (46) anschließbar ist und
e) der Schwenkzapfen (82) an der zweiten Flanschhälfte (56) und/oder an der Kupplungsvorrichtung (30') jeweils schwenkbar angreift.

2. Verwendung einer lösbaren Flanschverbindung nach Anspruch 1, dadurch gekennzeichnet, daß die Deichsel einen Halter (42) aufweist, in dem die Kraftübertragungswelle (46) gehalten ist.

3. Verwendung einer lösbaren Flanschverbindung nach Anspruch 2, dadurch gekennzeichnet, daß die Kraftübertragungswelle (46) gegenüber dem Halter (42) verstellbar ist.

4. Verwendung einer lösbaren Flanschverbindung nach einem oder mehreren der vorherigen Ansprüche, dadurch gekennzeichnet, daß das Getriebe (58) zwei Getriebegehäuse (60, 62) enthält, die relativ zueinander um eine im wesentlichen vertikale Achse (34) drehbeweglich sind und von denen eines starr an dem zweiten Flanschteil (56) angreift, während das andere mit der Kupplungsvorrichtung (30) verbunden ist.

5. Verwendung einer lösbaren Flanschverbindung nach Anspruch 4, dadurch gekennzeichnet, daß die Kupplungsvorrichtung (30) an dem anderen Getriebegehäuse (60) um eine im wesentlichen horizontale Achse schwenkbar angreift.

6. Verwendung einer lösbaren Flanschverbindung nach einem oder mehreren der vorherigen Ansprüche, dadurch gekennzeichnet, daß der erste Flanschteil (50) an der Unterseite der Deichsel (14) angeordnet ist.

7. Verwendung einer lösbaren Flanschverbindung nach einem oder mehreren der vorherigen Ansprüche, dadurch gekennzeichnet, daß die von dem Schwenkzapfen (82) an dem zweiten Flanschteil (56) aufgenommene Kupplungsvorrichtung (30') sowohl horizontal als auch vertikal schwenkbar ist und eine Kupplungsstange (86) enthält.

8. Verwendung einer lösbaren Flanschverbindung nach einem oder mehreren der vorherigen Ansprüche, dadurch gekennzeichnet, daß die Kupplungsvorrichtung (30, 30') mit den unteren Lenkern (38) einer Drei-Punkt-Gerätekupplung (16) des Fahrzeugs (10) verbindbar ist.

9. Verwendung einer lösbaren Flanschverbindung nach einem oder mehreren der vorherigen Ansprüche, dadurch gekennzeichnet, daß der Halter (42) als Abstellstütze ausgebildet ist.

10. Gezogene und über eine Gelenkwelle (20) und eine Kraftübertragungswelle (46) antreibbare Erntemaschine mit einer Deichsel (14) mit einem vertikalen oder im wesentlichen vertikalen Schwenkzapfen (82), der über eine erste und eine zweite Flanschhälfte (50) und (56) an die Deichsel anschließbar ist und über ein Kugelgelenk (84) eine Kupplungsstange (86) sowohl horizontal als auch vertikal schwenkbar aufnimmt, die an die unteren Lenker (38) einer Drei-Punkt-Gerätekupplung (16) eines Fahrzeuges (10) anschließbar ist, wobei der Schwenkzapfen (82) an der zweiten Flanschhälfte (56) und/oder an der Kupplungsvorrichtung (30') jeweils schwenkbar angreift.

## Claims

1. Use of a releasable flange coupling for selective attachment of either a pivot pin (82) or a gearbox (58) to a drawbar (14) of a driven machine (12) towed by a vehicle (10), wherein
a) the drawbar (14) has a first flange half (50),
b) the pivot pin (82) and the gearbox (58) are each provided with a respective second flange half (56),
c) a coupling device (30, 30') which can pivot about at least a substantially vertical axis is provided and engages with the pivot pin (82) or the gearbox (58) on the one hand and can be fitted to the vehicle (10) on the other hand,
d) an articulated shaft (20) which can be connected to the vehicle can be coupled directly or indirectly through a gearbox (58) to a power transmission shaft (46) and
e) the pivot pin (82) engages pivotally with the second flange half (56) and/or the coupling device (30').

2. Use of a releasable flange coupling according to claim 1, characterized in that the drawbar has a holder (42) in which the power transmission shaft (46) is retained.

3. Use of a releasable flange coupling according to claim 2, characterized in that the power transmission shaft (46) is adjustable relative to the holder (42).

4. Use of a releasable flange coupling according to one or more of the preceding claims, characterized in that the gearbox (58) has two gearbox housings (60, 62) which are rotatable relative to one another about a substantially vertical axis (34) and of which one is rigid with the second flange part (56) while the other is connected to the coupling device (30).

5. Use of a releasable flange coupling according to claim 4, characterized in that the coupling device (30) engages the other gearbox housing (60) pivotally about a substantially horizontal axis.

6. Use of a releasable flange coupling according to one or more of the preceding claims, characterized in that the first flange part (50) is arranged on the underside of the drawbar (14).

7. Use of a releasable flange coupling according to one or more of the preceding claims, characterized in that the coupling device (30') received by the pivot pin (82) on the second flange part (56) can pivot both horizontally and vertically and includes a coupling bar (86).

8. Use of a releasable flange coupling according to one or more of the preceding claims, characterized in that the coupling device (30, 30') can be coupled to the lower links (38) of a three-point hitch (16) of the vehicle (10).

9. Use of a releasable flange coupling according to one or more of the preceding claims, characterized in that the holder (42) is in the form of a parking stand.

10. A towed harvesting machine which can be driven by an articulated shaft (20) and a power transmission shaft (46), with a drawbar (14) with a vertical or substantially vertical pivot pin (82), which can be attached to the drawbar by first and second flange halves (50) and (56) and receives a coupling bar (86) pivoting both horizontally and vertically through a ball joint (84), which bar can be attached to the lower links (38) of a three-point hitch (16) of a vehicle (10), wherein the pivot pin (82) engages pivotally with the second flange half (56) and/or the coupling device (30').

## Revendications

1. Utilisation d'une liaison amovible à bride pour la fixation à volonté aussi bien d'un tourillon (82) ainsi que d'un mécanisme (58) à un timon (14) d'une machine entraînée (12) tirée par un véhicule (10), dans laquelle
a) le timon (14) comporte une première moitié de bride (50),
b) aussi bien le tourillon (82) que le mécanisme (58) sont équipés chacun d'une seconde moitié de bride (56),
c) il est prévu un dispositif d'attelage (30,30'), qui peut pivoter autour d'un axe au moins sensiblement vertical et qui d'une part attaque le tourillon (82) ou le mécanisme (58) et d'autre part peut être monté sur le véhicule (10),
d) un arbre articulé (20) pouvant être relié au véhicule peut être raccordé directement ou indirectement au moyen d'un mécanisme (58) à un arbre de transmission de force (46), et
e) le tourillon (82) attaque, de manière à pouvoir respectivement pivoter, la seconde moitié de bride (56) et/ou le dispositif d'attelage (30').

2. Utilisation d'une liaison amovible à bride selon la revendication 1, caractérisée en ce que le timon possède un dispositif de support (42), dans lequel est retenu l'arbre de transmission de force (46).

3. Utilisation d'une liaison amovible à bride selon la revendication 2, caractérisée en ce que l'arbre de transmission de force (46) est réglable par rapport au dispositif de retenue (42).

4. Utilisation d'une liaison amovible à bride selon une ou plusieurs des revendications précédentes, caractérisée en ce que le mécanisme (58) contient deux boîtiers de mécanisme (60,62), qui peuvent pivoter l'un par rapport à l'autre autour d'un axe essentiellement vertical (34) et dont l'un est fixé rigidement au second élément de bride (56), tandis que l'autre est relié au dispositif d'attelage (30).

5. Utilisation d'une liaison amovible à bride selon la revendication 4, caractérisée en ce que le dispositif d'attelage (30) attaque l'autre boitier (60) du mécanisme, de manière à pouvoir pivoter autour d'un axe essentiellement horizontal.

6. Utilisation d'une liaison amovible à bride selon une ou plusieurs des revendications précédentes, caractérisée en ce que le premier élément de bride (50) est disposé sur la face inférieure du timon (14).

7. Utilisation d'une liaison amovible à bride selon une ou plusieurs des revendications précédentes, caractérisée en ce que le dispositif d'attelage (30'), qui est reçu par le tourillon (82) sur le second élément de bride (56), peut pivoter aussi bien horizontalement que verticalement et contient une barre d'attelage (86).

8. Utilisation d'une liaison amovible à bride selon une ou plusieurs des revendications précédentes, caractérisée en ce que le dispositif d'attelage (30,30') peut être relié aux bras articulés inférieurs (38) d'un attelage à trois points (16) du véhicule (10).

9. Utilisation d'une liaison amovible à bride selon une ou plusieurs des revendications précédentes, caractérisée en ce que le dispositif de support (42) est agencé sous la forme d'un support de blocage.

10. Moissonneuse tractée et pouvant être entraînée par l'intermédiaire d'un arbre articulé (20) et d'un arbre de transmission de force (46) et comportant un timon (14) pourvu d'un tourillon vertical ou essentiellement vertical (82), qui peut être raccordé au timon par l'intermédiaire d'une première moitié de bride (50) et d'une seconde moitié de bride (56) et reçoit, par l'intermédiaire d'une articulation sphérique (84), une barre d'attelage (86) de manière qu'elle puisse pivoter aussi bien horizontalement que verticalement, cette barre d'attelage pouvant être raccordée aux bras articulés inférieurs (38) d'un accouplement à trois points (16) d'un véhicule (10), le tourillon (82) attaquant, respectivement de manière à pouvoir pivoter, la seconde moitié de bride (56) et/ou le dispositif d'attelage (30').
